# EUROPÄISCHE PATENTSCHRIFT

(11) **EP 1 663 696 B1**
(45) Veröffentlichungstag und Bekanntmachung des Hinweises auf die Patenterteilung: **16.04.2008**
(21) Anmeldenummer: 04766429.7
(22) Anmeldetag: 05.08.2004
(51) Int. Cl.: B60K 37/00, B60R 11/00

(54) **INSTRUMENTENTAFEL**
INSTRUMENT PANEL
TABLEAU DE BORD

(30) Priorität: 09.09.2003 DE 10341839
(43) Veröffentlichungstag der Anmeldung: 07.06.2006
(73) Patentinhaber: VDO Automotive AG, 93055 Regensburg (DE); Daimler AG, 70327 Stuttgart (DE)
(72) Erfinder: KRAUS, Ulrich, 78056 Villingen-Schwenningen (DE); FUNK, Stefan, 42799 Leichlingen (DE); GÖTZ, Franz, 78052 Villingen-Schwenningen (DE); LAMELI, Volker, 68623 Lampertheim (DE)
(86) Internationale Anmeldenummer: PCT/EP2004/051724
(87) Internationale Veröffentlichungsnummer: WO 2005/025920

(56) Entgegenhaltungen:
- EP-A- 0 404 746
- WO-A-97/03866
- WO-A-02/100674
- DE-U- 29 801 659
- US-A- 5 685 598

## Beschreibung

Die Erfindung bezieht sich auf eine Instrumententafel, insbesondere lageveränderliche Instrumententafel für ein Kraftfahrzeug, mit einem Träger, der an einer Verkleidungsschale der Instrumententafel anordenbar ist und an dem ein Sonderbauteil, insbesondere ein Zusatzgerät befestigbar ist, wobei der Träger ein vorzugsweise sich längserstreckendes Blechbauteil ist, das an einem ersten Endbereich durch ein Verbindungselement lösbar an der Verkleidungsschale der Instrumententafel befestigbar ist und in seinem Mittelbereich einen Trägerbereich bildet, an dem das Sonderbauteil befestigbar ist, wobei der Träger an seinem dem ersten Endbereich entgegengesetzten zweiten Endbereich einen oder mehrere Haken aufweist, die in entsprechende Hakenaufnahmen in der Verkleidungsschale der Instrumententafel eingreifbar sind.

Insbesondere bei Nutzkraftwagen kommt es vor, daß die serienmäßige Instrumententafel individuell mit einem Sonderbauteil versehen werden soll, das z.B. Bedienelemente und/oder Anzeigelemente und/oder ein Display aufweisen kann. Dieses Sonderbauteil soll während der Fahrt von dem Fahrer bedient und abgelesen sowie unabhängig von der jeweilig eingestellten Lage der Instrumententafel für den Fahrer gut erreichbar sein.

Da das Sonderbauteil überlicherweise nicht serienmäßig mit der Instrumententafel mitgeliefert sondern nachgerüstet wird, ist eine einfache Montierbarkeit erforderlich.

Gleichzeitig muß die Anbringung des Sonderbauteils an der Instrumententafel und die Instrumententafel selbst so sein, daß sie für die erhöhte Lasteinwirkung durch das Gewicht des Sonderbauteils ausgelegt sind.

Aus der DE 298 01 659 U ist eine Instrumententafel mit den Merkmalen des Oberbegriffs des Anspruchs 1 bekannt, wobei eine Telefonhalterung für Kraftfahrzeuge eine C-förmigen Montageblock besitzt, in dem eine Blechlasche angeordnet ist, die mit ihren Enden aus dem Montageblock herausragt. Der Montageblock wird dem Fahrgastraum zugewandt auf einem Armaturenbrett befestigt, wobei die Enden des Montageblocks den vorderen Rand und den hinteren Rand des Armaturenbretts umgreifen. Dem Fahrgastraum zugewandt besitzt die Telefonhalterung eine Bildschirmaufnahmefläche und eine Telefonaufnahmefläche zur Montage eines Bildschirms und eines Telefons.

Aufgabe der Erfindung ist es eine Instrumententafel der eingangs genannten Art zu schaffen, die diese Forderungen bei serienmäßiger Ausgestaltung der Instrumententafel erfüllt und eine einfache Montage und Demontage des Sonderbauteils ermöglicht.

Diese Aufgabe wird erfindungsgemäß dadurch gelöst, daß die Hakenaufnahmen an der Oberseite und das Verbindungselement an der dem Innenraum des Kraftfahrzeugs abgewandten Seite der weitgehend senkrecht ausgerichteten Verkleidungsschale der Instrumententafel angeordnet sind.

Damit erfolgt ein erheblicher Teil der Abstützung des Gewichts des Sonderbauteils an der weitgehend senkrecht ausgerichteten, dem Innenraum abgewandten Seite der Verkleidungsschale, die dabei als Abstützsteg wirkt.

Durch die Anordnung der Verbindungselemente an der dem Innenraum abgewandten Seite kann das Erscheinungsbild der Instrumententafel nicht negativ beeinflußt werden.

Durch einfaches Aufsetzen des Trägers auf die serienmäßige Instrumententafel mit einem Einhaken des zweiten Endbereichs in die Hakenaufnahme und ein Befestigen des ersten Endbereichs durch das Verbindungselement kann leicht jedes gewünschte Sonderbauteil ohne Veränderung und ohne Eingriff in die serienmäßige Instrumententafel an dieser angebracht werden. Eine Nachrüstung eines Sonderbauteils z.B. durch den Endkunden führt nicht zu einem Verlust der Gewährleistung für die Instrumententafel, da in diese nicht eingegriffen werden muß.

Die einzelnen Bauteile der Instrumententafel bleiben unverändert Serienteil, so daß ein Austausch im Wartungsfall problemlos möglich ist.

Die Verkleidungsschale kann ein- oder mehrteilig ausgebildet und ein Kunststoffspritzgußteil sein.

Eine mehrteilige Ausbildung ermöglicht ein leichtes Öffnen für Wartungs- und Reparaturarbeiten an der Instrumententafel.

Ein kostengünstiger einteiliger Aufbau wird erreicht, wenn die Haken durch Abbiegungen am zweiten Endbereich des Blechbauteils gebildet sind.

Sind die Haken und/oder Hakenaufnahmen mit einer elastischen Beschichtung versehen, so werden die Haken spielfrei in den Hakenaufnahmen aufgenommen und Klappergeräusche durch die Erschütterungen während des Fahrbetriebs vermieden.

Der Träger kann etwa V-förmig ausgebildet sein.

Zur sicheren und stabilen Befestigung kann der Träger zwischen dem ersten Endbereich und dem zweiten Endbereich einen insbesondere ebenen Trägerbereich besitzen, an dem das Sonderbauteil befestigbar ist.

Dazu weist vorzugsweise der Träger an seinem Trägerbereich eine oder mehrere Befestigungsvorrichtungen zur Befestigung des Sonderbauteils auf, wobei in einfacher Ausbildung und zur leichten Montage die Befestigungsvorrichtungen Gewindebohrungen oder hervorstehende Gewindebolzen sind, mittels derer das Sonderbauteil mit dem Träger durch eine Schraubverbindung befestigbar sind.

Die Befestigungsvorrichtungen können in ihrem Anordnungsmuster so sein, daß verschiedene Sonderbauteile sowie eine Anordnung in unterschiedlichen Positionen möglich ist.

Das Verbindungselement ist in einfacher Weise eine Schraubverbindung, wobei die Verkleidungsschale Gewindebohrungen aufweisen kann, in die Schrauben zur Befestigung des Trägers einschraubbar sind.

Um sicher zu stellen, daß auch Sonderbauteile größeren Gewichts problemlos montiert werden können, kann die Verkleidungsschale an ihrer Außenseite und und/oder Innenseite im Bereich der Schraubverbindung mit Verstärkungselementen versehen sein.

Dabei leiten die Verstärkungselemente die Gewichtskraft der Sonderbauteile in die Mechanik der Instrumententafel, so daß eine Überbeanspruchung der insbesondere aus Kunststoff bestehende Verkleidungsschale vermieden wird.

Diese Verstärkungselemente können insbesondere metallische Verstärkungsplatten sein, die im Falle des Bedarfs in entsprechende Aufnahmen der serienmäßigen Verkleidungsschale eingebaut werden können.

Sind die Verstärkungselemente in die Verkleidungsschale bei der Serienproduktion der Instrumententafel eingespritzt, so befinden sie sich optimal positioniert und bereits befestigt an der Verkleidungsschale.

Ein Abnehmen eines Teils einer mehrteiligen Verkleidungsschale bei montiertem Sonderbauteil ist auf einfache Weise möglich, wenn der Träger zweiteilig ausgebildet ist und seine beiden Teile in einem Bereich lösbar miteinander verbunden sind, der einen Verbindungsbereich zweier Teile der mehrteiligen Verkleidungsschale überdeckt.

Auf einfache Weise sind die beiden Teile des Trägers durch eine Schraubverbindung miteinander verbunden.

Sind die Hakenaufnahmen durch eine Abdeckkappe verschließbar, so ist die Integration des Trägers im Erscheinungsbild der Instrumententafel gegeben und das ästhetische Erscheinungsbild der Instrumententafel nicht gestört.

Dies im besonderen Maße unter Vermeidung von Erhebungen an der Oberfläche der Instrumententafel, wenn die Verkleidungsschale im Bereich der Hakenaufnahme eine der Kontur der Abdeckkappe entsprechende Vertiefung besitzt, in die die Abdeckkappe insbesondere oberflächenbündig zu der die Vertiefung umgebenden Oberfläche der Verkleidungsschale einsetzbar ist.

Zur einfach steckbaren Montage kann die Abdeckkappe Halteelemente zum Einführen in die Hakenaufnahmen und zur Halterung der Abdeckkappe an der Verkleidungsschale besitzen.

Das Sonderbauteil kann Anzeige- und/oder Bedienelemente und/oder ein Display aufweisen.

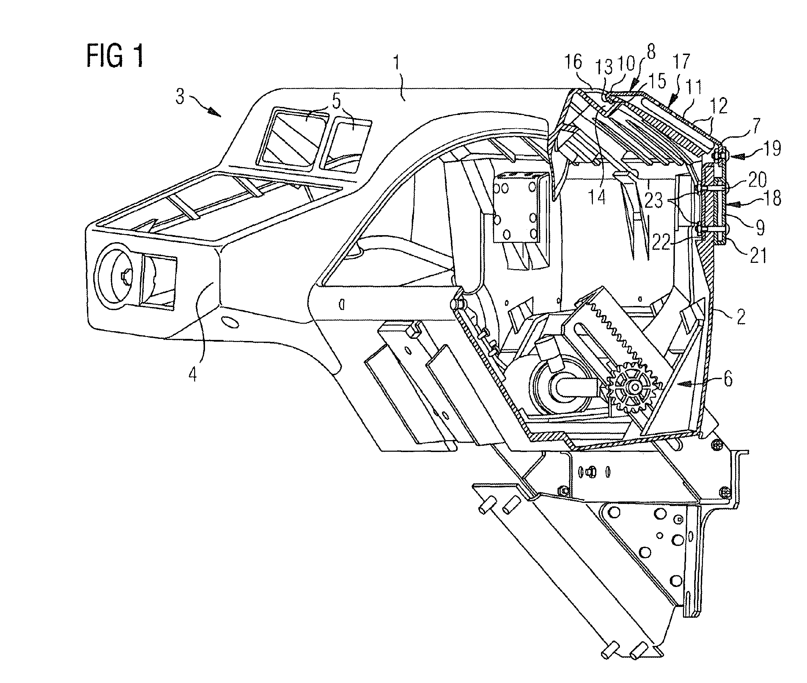

Ein Ausführungsbeispiel der Erfindung ist in der Zeichnung dargestellt und wird im folgenden näher beschrieben. Es zeigen
- Figur 1: eine aufgeschnittene perspektivische Ansicht einer Instrumententafel

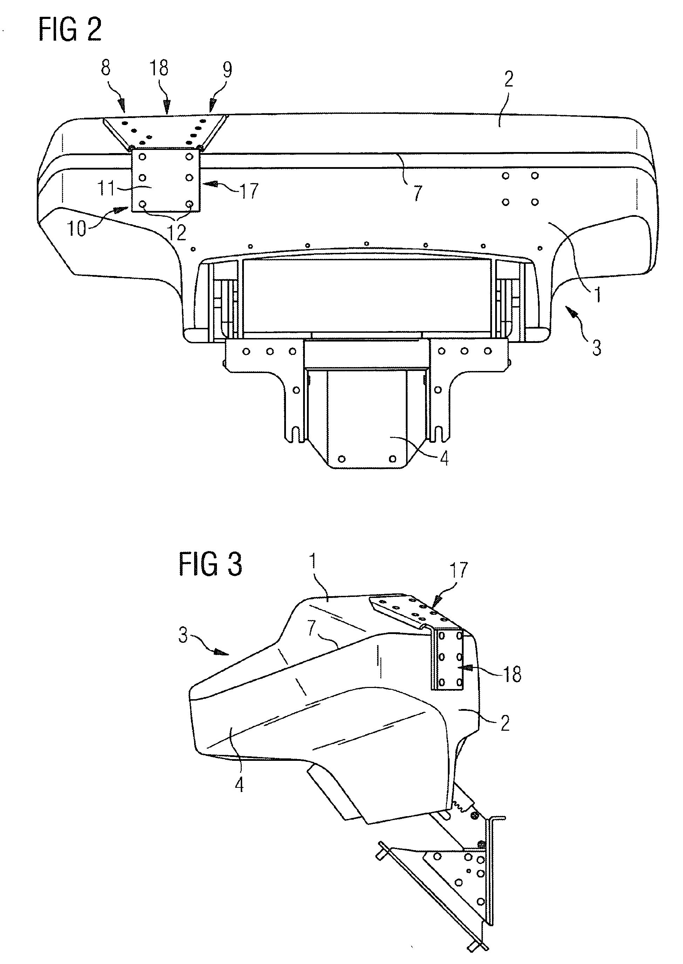

- Figur 2: die Instrumententafel nach Figur 1 in einer Ansicht
- Figur 3: die Instrumententafel nach Figur 2 in einer Seitenansicht

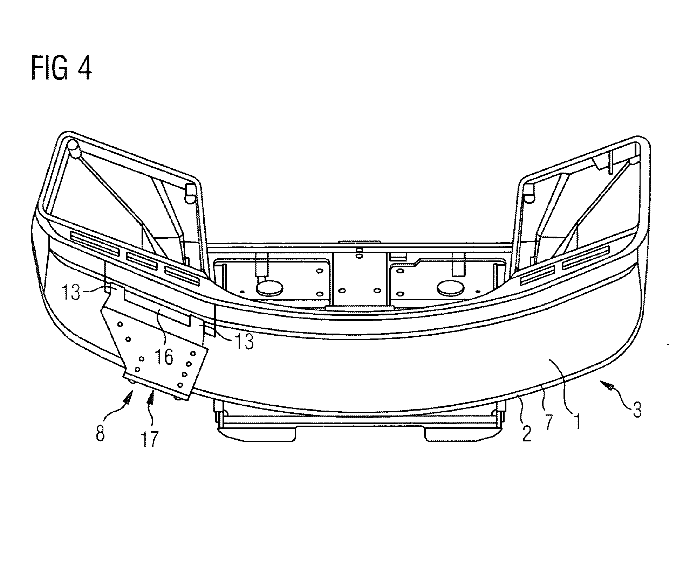

- Figur 4: die Instrumententafel nach Figur 1 in der Draufsicht.

Die in den Figuren dargestellte Instrumententafel besitzt eine zweiteilige, aus einem Oberteil 1 und einem Unterteil 2 bestehende Verkleidungsschale 3 aus Kunststoff. Die Verkleidungsschale 3 weist eine zu einer Fahrerposition im Innenraum des Kraftfahrzeugs hervorstehende Lenksäulenaufnahme 4 auf, über der Öffnungen 5 zum Einsetzen von Anzeigeinstrumenten angeordnet sind.

Innerhalb der Verkleidungsschale 3 ist eine Feststellmechanik 6 zur Lageveränderung der Instrumententafel vorhanden.

Etwa waagrecht verläuft im oberen, dem Innenraum des Kraftfahrzeugs abgewandten Bereich der Verkleidungsschale 3 ein Verbindungsbereich 7 zwischen Oberteil 1 und Unterteil 2. Dieser Verbindungsbereich 7 wird von einem etwa V-förmig ausgebildeten Träger 8 überbrückt, der mit seinem oberen ersten Endbereich 10 an dem Oberteil 1 und mit seinem unteren zweiten Endbereich 9 an dem Unterteil 2 befestigt ist.

Zwischen dem ersten Endbereich 10 und dem zweiten Endbereich 9 besitzt der als sich längserstreckendes Blechbauteil ausgebildete Träger 8 einen ebenen Trägerbereich 11 an dem Gewindebohrungen 12 zur Befestigung eines nicht dargestellten Sonderbauteils angeordnet sind. Der Trägerbereich 11 ist nicht in Anlage an der Verkleidungsschale 3 sondern erstreckt sich in einem Abstand zu dieser.

An seinem ersten Endbereich 10 sind an dem Träger 8 durch Abbiegungen im Abstand zueinander zwei Haken 13 gebildet, die in entsprechende Hakenaufnahmen 14 im Oberteil 1 eingreifen.

Die Hakenaufnahmen 14 sind mit einer elastischen Beschichtung 15 versehen, so daß die Haken 13 spielfrei darin eingesetzt sind. Einteilig ist an der Beschichtung 15 eine Abdeckkappe 16 ausgebildet, die die Hakenaufnahmen 14 abdeckt und sich bis über das Ende des ersten Endbereichs 10 des Trägers 8 erstreckt. Damit wird das Erscheinungsbild der Instrumententafel nicht durch offene Hakenaufnahmen gestört.

Der Träger besteht aus zwei Teilen 17 und 18, die am unteren Ende des Trägerbereichs 11 über dem Verbindungsbereich 7 von Oberteil 1 und Unterteil 2 durch eine Schraubverbindung 19 miteinander verbunden sind.

An dem der Schraubverbindung 19 entgegengesetzten Ende des Teils 17 sind die Haken 13 ausgebildet.

Das Teil 18 weist zur Verkleidungsschale 3 hervorstehende Gewindebolzen 20 auf, die durch entsprechende Bohrungen einer auf der Außenseite des Unterteils aufliegenden ersten Verstärkungsplatte 21 sowie ebenfalls entsprechende Bohrungen in dem Unterteil 2 sowie in einer auf der Innenseite des Unterteils 2 aufliegenden zweiten Verstärkungsplatte 22 hindurchragen und durch Muttern 23 gegen die zweite Verstärkungsplatte 22 verspannt sind.

## Patentansprüche

1. Instrumententafel, insbesondere lageveränderliche Instrumententafel für ein Kraftfahrzeug, mit einem Träger (8), der an einer Verkleidungsschale (3) der Instrumententafel anordenbar ist und an dem ein Sonderbauteil, insbesondere ein Zusatzgerät befestigbar ist, wobei der Träger (8) ein vorzugsweise sich längserstreckendes Blechbauteil ist, das an einem ersten Endbereich durch ein Verbindungselement lösbar an der Verkleidungsschale (3) der Instrumententafel befestigbar ist und in seinem Mittelbereich einen Trägerbereich (11) bildet, an dem das Sonderbauteil befestigbar ist, wobei der Träger (8) an seinem dem ersten Endbereich (9) entgegengesetzten zweiten Endbereich (10) einen oder mehrere Haken (13) aufweist, die in entsprechende Hakenaufnahmen (14) in der Verkleidungsschale (3) der Instrumententafel eingreifbar sind, **dadurch gekennzeichnet, daß** die Hakenaufnahmen (14) an der Oberseite und das Verbindungselement an der dem Innenraum des Kraftfahrzeugs abgewandten Seite der weitgehend senkrecht ausgerichteten Verkleidungsschale (3) der Instrumententafel angeordnet sind.

2. Instrumententafel nach Anspruch 1, **dadurch gekennzeichnet, daß** die Verkleidungsschale (3) ein- oder mehrteilig ausgebildet und ein Kunststoffspritzgußteil ist.

3. Instrumententafel nach einem der vorhergehenden Ansprüche, **dadurch gekennzeichnet, daß** die Haken (13) durch Abbiegungen am zweiten Endbereich (10) des Blechbauteils gebildet sind.

4. Instrumententafel nach einem der vorhergehenden Ansprüche, **dadurch gekennzeichnet, daß** die Haken und/oder die Hakenaufnahmen (14) mit einer elastischen Beschichtung (15) versehen sind.

5. Instrumententafel nach einem der vorhergehenden Ansprüche, **dadurch gekennzeichnet, daß** der Träger (8) etwa V-förmig ausgebildet ist.

6. Instrumententafel nach einem der vorhergehenden Ansprüche, **dadurch gekennzeichnet, daß** der Träger (8) zwischen dem ersten Endbereich (9) und dem zweiten Endbereich (10) einen insbesondere ebenen Trägerbereich (11) besitzt, an dem das Sonderbauteil befestigbar ist.

7. Instrumententafel nach Anspruch 6, **dadurch gekennzeichnet, daß** der Träger (8) an seinem Trägerbereich (11) eine oder mehrere Befestigungsvorrichtungen zur Befestigung des Sonderbauteils aufweist.

8. Instrumententafel nach Anspruch 7, **dadurch gekennzeichnet, daß** die Befestigungsvorrichtungen Gewindebohrungen (12) oder hervorstehende Gewindebolzen sind, mittels derer das Sonderbauteil mit dem Träger (8) durch eine Schraubverbindung befestigbar ist.

9. Instrumententafel nach einem der vorhergehenden Ansprüche, **dadurch gekennzeichnet, daß** das Verbindungselement eine Schraubverbindung ist.

10. Instrumententafel nach Anspruch 9, **dadurch gekennzeichnet, daß** die Verkleidungsschale Gewindebohrungen aufweist, in die Schrauben zur Befestigung des Trägers einschraubbar sind.

11. Instrumententafel nach einem der Ansprüche 9 und 10, **dadurch gekennzeichnet, daß** die Verkleidungsschale (3) an ihrer Außenseite und/oder Innenseite im Bereich der Schraubverbindung mit Verstärkungselementen versehen ist.

12. Instrumententafel nach Anspruch 11, **dadurch gekennzeichnet, daß** die Verstärkungselemente insbesondere metallische Verstärkungsplatten (21, 22) sind.

13. Instrumententafel nach einem der Ansprüche 11 und 12, **dadurch gekennzeichnet, daß** die Verstärkungselemente in die Verkleidungsschale eingespritzt sind.

14. Instrumententafel nach einem der vorhergehenden Ansprüche, **dadurch gekennzeichnet, daß** der Träger (8) zweiteilig ausgebildet ist und seine beiden Teile (17, 18) in einem Bereich lösbar miteinander verbunden sind, der einen Verbindungsbereich (7) zweier Teile der mehrteiligen Verkleidungsschale (3) überdeckt.

15. Instrumententafel nach Anspruch 14,**dadurch gekennzeichnet, daß** die beiden Teile (17, 18) des Trägers (8) durch eine Schraubverbindung (19) miteinander verbunden sind.

16. Instrumententafel nach einem der vorhergehenden Ansprüche, **dadurch gekennzeichnet, daß** die Hakenaufnahmen (14) durch eine Abdeckkappe (16) verschließbar sind.

17. Instrumententafel nach Anspruch 16, **dadurch gekennzeichnet, daß** die Verkleidungsschale im Bereich der Hakenaufnahme eine der Kontur der Abdeckkappe entsprechende Vertiefung besitzt, in die die Abdeckkappe insbesondere oberflächenbündig zur der die Vertiefung umgebenden Oberfläche der Verkleidungsschale einsetzbar ist.

18. Instrumententafel nach einem der Ansprüche 16 und 17, **dadurch gekennzeichnet, daß** die Abdeckkappe Halteelemente zum Einführen in die Hakenaufnahmen und zur Halterung der Abdeckkappe an der Verkleidungsschale besitzt.

19. Instrumententafel nach einem der vorhergehenden Ansprüche, **dadurch gekennzeichnet, daß** das Sonderbauteil Anzeige- und/oder Bedienelemente und/oder ein Display aufweist.

## Claims

1. Instrument panel, in particular a variably positionable instrument panel for a motor vehicle comprising a carrier (8) that is capable of being arranged on a cladding shell (3) of the instrument panel and to which a special component part, in particular a supplementary device, is capable of being fixed, the carrier (8) preferably being embodied in the form of a longitudinally extending sheet metal component part that is capable of being fixed in a removable manner to the cladding shell (3) of the instrument panel in a first end area by means of a connecting element and in its middle area forms a carrier area (11), to which the special component part is capable of being fixed, the carrier (8) in its second end area (10) opposite the first end area (9) exhibiting one or a plurality of hooks (13), which are capable of engaging in corresponding hook receptacles (14) in the cladding shell (3) of the instrument panel, **characterized in that** the hook receptacles (14) are arranged on the upper side and the connecting element is arranged on the side of the essentially perpendicularly arranged cladding shell (3) of the instrument panel facing away from the interior of the motor vehicle.

2. Instrument panel according to Claim 1, **characterized in that** the cladding panel (3) is of single-part of multipart configuration and is an injection-moulded plastic component.

3. Instrument panel according to one of the preceding claims, **characterized in that** the hooks (13) are formed by curves in the second end area (10) of the sheet metal component part.

4. Instrument panel according to one of the preceding claims, **characterized in that** the hooks and/or the hook receptacles (14) are provided with an elastic coating (15).

5. Instrument panel according to one of the preceding claims, **characterized in that** the carrier (8) is of approximately V-shaped configuration.

6. Instrument panel according to one of the preceding claims, **characterized in that** the carrier (8), between the first end area (9) and the second end area (10), possesses a particularly smooth carrier area (11), to which the special component part can be fixed.

7. Instrument panel according to Claim 6, **characterized in that** the carrier (8) in its carrier area (11) exhibits one or a plurality of fixing devices for the purpose of fixing the special component part.

8. Instrument panel according to Claim 7, **characterized in that** the fixing devices are internally threaded holes (12) or projecting threaded bolts, by means of which the special component part is capable of being fixed to the carrier (8) by a screwed connection.

9. Instrument panel according to one of the preceding claims, **characterized in that** the connecting element is a screwed connection.

10. Instrument panel according to Claim 9, **characterized in that** the cladding shell exhibits internally threaded holes, into which the screws for fixing the carrier can be screwed.

11. Instrument panel according to one of Claims 9 and 10, **characterized in that** the cladding shell (3) is provided on its outside and/or its inside with reinforcing elements in the vicinity of the screwed connection.

12. Instrument panel according to Claim 11, **characterized in that** the reinforcing elements are in particular metal reinforcing plates (21, 22).

13. Instrument panel according to one of Claims 11 and 12, **characterized in that** the reinforcing elements are injection-moulded into the cladding shell.

14. Instrument panel according to one of the preceding claims, **characterized in that** the carrier (8) is of two-part execution, and **in that** its two parts (17, 18) are attached to one another in a detachable manner in an area which covers a connecting area (7) of two parts of the multipart cladding shell (3).

15. Instrument panel according to Claim 14, **characterized in that** the two parts (17, 18) of the carrier (8) are connected to one another by a screwed connection (19).

16. Instrument panel according to one of the preceding claims, **characterized in that** the hook receptacles (14) are capable of being closed by means of a covering cap (16).

17. Instrument panel according to Claim 16, **characterized in that** the cladding shell in the vicinity of the hook receptacle possesses a depression corresponding to the contour of the covering cap, into which depression the covering cap is capable of being inserted in particular so that it is flush-mounted in relation to the surface of the cladding shell surrounding the depression.

18. Instrument panel according to one of Claims 16 and 17, **characterized in that** the covering cap possesses retaining elements intended for introduction into the hook receptacles and for retaining the covering cap on the cladding shell.

19. Instrument panel according to one of the preceding claims, **characterized in that** the special component part exhibits indicating and/or operating elements and/or a display.

## Revendications

1. Tableau de bord, notamment, tableau de bord à position variable pour véhicule automobile, comportant un support (8), qui peut être disposé sur une coque d'habillage (3) du tableau de bord et sur lequel un constituant particulier, notamment, un appareil supplémentaire, peut être fixé, où le support (8) est, d'une façon préférentielle, un constituant allongé en tôle qui peut, à sa première extrémité, être fixé par un organe de liaison, d'une façon amovible, à la coque d'habillage (3) du tableau de bord et qui forme, dans sa partie centrale, une zone porteuse (11) à laquelle le constituant particulier peut être fixé, le support (8) comportant, à sa deuxième extrémité (10) opposée à la première extrémité (9), un ou plusieurs crochets (13) qui s'engagent dans des logements adéquats (14) pour les crochets ménagés dans la coque d'habillage (3) du tableau de bord , **caractérisé par le fait que** les logements (14) pour les crochets sont disposés sur la face supérieure et l'organe de liaison, sur la face de la coque d'habillage (3) opposée à l'habitacle du véhicule automobile, ladite coque d'habillage (3) étant orientée pratiquement dans le sens vertical du tableau de bord.

2. Tableau de bord selon la revendication 1, **caractérisé par le fait que** la coque d'habillage (3) est conçue en une ou plusieurs parties et est une pièce en matière plastique moulée par injection.

3. Tableau de bord selon l'une des revendications précédentes, **caractérisé par le fait que** les crochets (13) sont ménagés par cambrage à la deuxième extrémité (10) du constituant en tôle.

4. Tableau de bord selon l'une des revendications précédentes, **caractérisé par le fait que** les crochets et / ou les logements (14) pour les crochets sont dotés d'un revêtement (15) élastique.

5. Tableau de bord selon l'une des revendications précédentes, **caractérisé par le fait que** le support (8) est approximativement en forme de V.

6. Tableau de bord selon l'une des revendications précédentes, **caractérisé par le fait que** le support (8) a, entre la première extrémité (9) et la deuxième extrémité (10), une zone porteuse (11), notamment plane, sur laquelle peut être fixé le constituant particulier.

7. Tableau de bord selon la revendication 6, **caractérisé par le fait que** le support (8) comporte, sur sa zone porteuse (11), un ou plusieurs dispositifs de fixation permettant de fixer le constituant particulier.

8. Tableau de bord selon la revendication 7, **caractérisé par le fait que** les dispositifs de fixation sont des alésages filetés (12) ou des boulons filetés faisant saillie, au moyen desquels le constituant particulier peut être fixé au support (8) par une liaison vissée.

9. Tableau de bord selon l'une des revendications précédentes, **caractérisé par le fait que** l'organe de liaison est une liaison vissée.

10. Tableau de bord selon la revendication 9, **caractérisé par le fait que** la coque d'habillage a des alésages filetés, dans lesquels on peut visser des vis pour fixer le support.

11. Tableau de bord selon l'une des revendications 9 et 10, **caractérisé par le fait que** la coque d'habillage (3) est dotée, sur sa face extérieure et / ou sur sa face intérieure, d'éléments de renforcement dans la zone de la liaison vissée.

12. Tableau de bord selon la revendication 11, **caractérisé par le fait que** les éléments de renforcement sont notamment des plaques métalliques de renforcement (21, 22).

13. Tableau de bord selon l'une des revendications 11 et 12, **caractérisé par le fait que** les éléments de renforcement sont injectés dans la coque d'habillage.

14. Tableau de bord selon l'une des revendications précédentes, **caractérisé par le fait que** le support (8) est en deux parties et que ses deux parties (17, 18) sont liées l'une et l'autre d'une façon amovible dans une zone qui recouvre une zone de liaison (7) entre deux parties de la coque d'habillage (3) en plusieurs parties.

15. Tableau de bord selon la revendication 11, **caractérisé par le fait que** les deux parties (17, 18) du support (8) sont liées l'une à l'autre par une liaison vissée (19).

16. Tableau de bord selon l'une des revendications précédentes, **caractérisé par le fait que** les logements (14) pour les crochets peuvent être fermés par un capot de fermeture (16).

17. Tableau de bord selon la revendication 16, **caractérisé par le fait que** la coque d'habillage a, dans la zone des logements pour les crochets, un enfoncement correspondant au contour du capot de fermeture dans lequel le capot de fermeture peut être inséré, notamment en affleurement par rapport à la surface supérieure de la coque d'habillage entourant l'enfoncement.

18. Tableau de bord selon l'une des revendications 16 et 17, **caractérisé par le fait que** le capot de fermeture possède des éléments de retenue destinés à être introduits dans les logements pour les crochets et à maintenir le capot de fermeture sur la coque d'habillage.

19. Tableau de bord selon l'une des revendications précédentes, **caractérisé par le fait que** le constituant particulier comporte un affichage et / ou des organes de commande et/ou un écran.
